# EUROPÄISCHE PATENTSCHRIFT

(11) **EP 0 815 602 B1**
(45) Veröffentlichungstag und Bekanntmachung des Hinweises auf die Patenterteilung: **06.05.1999**
(21) Anmeldenummer: 95941667.8
(22) Anmeldetag: 06.12.1995
(51) Int. Cl.: H01M 2/14, C25B 13/00, C08J 5/22

(54) **VERFAHREN ZUR REPARATUR VON BATTERIE-SEPARATOREN**
METHOD OF REPAIRING BATTERY SEPARATORS
PROCEDE DE REPARATION DE SEPARATEURS DE BATTERIES

(30) Priorität: 12.12.1994 DE 4446675
(43) Veröffentlichungstag der Anmeldung: 07.01.1998
(73) Patentinhaber: DARAMIC, INC., 22844 Norderstedt (DE)
(72) Erfinder: BÖHNSTEDT, Werner, D-24558 Henstedt-Ulzburg (DE); IHMELS, Klaus, Heinrich, D-22303 Hamburg (DE); RUHOFF, Jürgen, D-22848 Norderstedt (DE); KREY, Hans-Joachim, D-24558 Henstedt-Ulzburg (DE); FISCHER, Karsten, D-22339 Hamburg (DE)
(74) Vertreter: UEXKÜLL & STOLBERG
(86) Internationale Anmeldenummer: EP9504772
(87) Internationale Veröffentlichungsnummer: WO9619014

(56) Entgegenhaltungen:
- EP-A- 0 039 897
- EP-A- 0 079 218
- DATABASE WPI Section Ch, Week 8209 Derwent Publications Ltd., London, GB; Class A35, AN 82-16892E & JP,A,57 014 625 ( KANEGAFUCHI CHEM KK) , 25.Januar 1982

## Beschreibung

Die vorliegende Erfindung betrifft ein Verfahren zur Reparatur von Fehlstellen in Batterie-Separatoren. Das Verfahren umfaßt das gezielte Aufbringen eines Reparaturmaterials auf die Fehlstelle oder das punktuelle Erhitzen der defekten Stelle.

Batterie-Separatoren werden in Akkumulatoren eingesetzt, um einen direkten Kontakt und damit Kurzschlüsse zwischen den Elektroden-Platten zu verhindern. Die Separatoren werden aus porösen säure- und oxidationsbeständigen Materialien hergestellt, wobei die Porengröße so gewählt wird, daß sie einen ionischen Stromfluß durch die Membran erlaubt, das Durchtreten von Durchwachsungen und Partikeln, die sich von den Akkumulatorplatten abgelöst haben, aber unterbindet.

Man unterscheidet zwischen makroporösen Separatoren mit einem mittleren Porendurchmesser von etwa 10 bis 30 µm und mikroporösen Separatoren mit einem durchschnittlichen Porendurchmesser von unter 1 µm. Die Gefahr des Eindringens von Partikeln und Durchwachsungen und damit die Gefahr von Kurzschlüssen ist bei mikroporösen Separatoren aufgrund der geringeren Porengröße besonders klein. Mit mikroporösen Separatoren bestückte Bleiakkumulatoren weisen daher gewöhnlich eine erhöhte Lebensdauer auf.

Separatoren werden im allgemeinen in Form von Steck- oder Taschenseparatoren eingesetzt. Steckseparatoren werden als Stückware gefertigt und vom Separatorhersteller auf die geforderte Höhe und Breite zugeschnitten. Sie sind relativ steif und werden bei der Batterieherstellung als solche zwischen die Akkumulatorplatten gebracht. Taschenseparatoren werden in der Regel als Rollenware mit der gewünschten Breite gefertigt und erst beim Batteriehersteller in einem vollautomatischen Prozeß auf eine vorgegebene Länge geschnitten und zu Taschen geformt. Diese an drei Seiten geschlossenen Taschen dienen zur Aufnahme der Akkumulatorplatten.

Ein Problem bei der Produktion von Separatoren liegt in der Entstehung von Fehlstellen, d.h. von Löchern mit einem wesentlich größeren Durchmesser als dem der Membranporen. Solche Fehlstellen erhöhen die Kurzschlußgefahr und verkürzen die Lebensdauer der Akkumulatoren, da Durchwachsungen und von den Elektrodenplatten abgelöste Partikel leicht durch diese Löcher durchtreten können. Die Kurzschlußgefahr ist bei Taschenseparatoren besonders hoch, weil hier die von den Akkumulatorplatten abgelösten Partikel nicht wie bei den offenen Steckseparatoren in einen Schlammraum fallen, sondern in der Tasche verbleiben.

Während bei Steckseparatoren das Aussortieren fehlerhafter Ware problemlos möglich ist, werden bei der Rollenware die detektierten Löcher im allgemeinen nur durch eine Markierung gekennzeichnet, die es dem Batteriehersteller erlaubt, den fehlerhaften Abschnitt nach dem Zuschneiden auszusortieren. Um den mit dem Aussortieren verbundenen Aufwand möglichst gering zu halten, geben die Batteriehersteller üblicherweise eine maximale Anzahl von Fehlstellen pro Längeneinheit der Rollenware vor. Ware, welche diese Spezifikation überschreitet, wird vom Batteriehersteller nicht abgenommen und muß daher verworfen werden.

Anders als bei Separatorstückware entsteht daher mit dem Aussortieren fehlerhafter Rollenware entweder dem Batteriehersteller oder dem Separatorenhersteller ein erheblicher, mit signifikanten Produktivitätsverlusten verbundener Aufwand.

Aus der DE-OS 43 28 954 und der US-A-4 535 112 sind Verfahren und Mittel zur Reparatur von nicht-porösen Ionenaustausch-Membranen und -Folien auf der Basis von fluorierten Carboxypolymeren bekannt. Zur Reparatur werden Lösungen von fluorierten Carboxypolymeren oder von Gemischen aus fluorierten Carboxy- und Sulfonpolymeren auf die beschädigte Stelle aufgetragen, anschließend wird das Lösungsmittel abgedampft. Das Auftragen erfolgt bevorzugt manuell in mehreren Schichten, wobei stark beanspruchte Membranen in einem zusätzlichen Schritt mit einem Verstärkungsmaterial versehen werden. Die beschriebenen Verfahren sind umständlich und erfordern relativ hohe Temperaturen und lange Trocknungszeiten. Im übrigen wird lediglich die manuelle Einzelreparatur von Fehlstellen, die durch mechanische Beanspruchungen der Membranen in der Elektrolysezelle entstanden sind, beschrieben.

Aufgabe der vorliegenden Erfindung ist die Schaffung eines Verfahrens zur Reparatur von fertigungsbedingten Fehlstellen in porösen Separatoren für Akkumulatoren, insbesondere in Rollenware zur Herstellung von Taschenseparatoren. Das Verfahren soll eine schnelle und dauerhafte Reparatur der Fehlstellen erlauben und sich für die "in-line" Reparatur von Separatoren eignen.

Die durch das Verfahren geschaffene Reparaturstelle soll eine hohe Säurebeständigkeit, gute Haftung und eine gute Flexibilität aufweisen. Außerdem sollten die verwendeten Reparaturmaterialien mit den üblichen Separatormaterialien kompatibel sein, d.h. beispielsweise keine Lösungsmittel enthalten, welche die Separatoren schädigen.

Die Aufgabe wird durch ein Verfahren gelöst, bei dem auf die zu reparierende Stelle ein geeignetes Reparaturmaterial aufgebracht oder die zur reparierende Stelle punktuell erhitzt und dabei gegebenenfalls gleichzeitig zusammengepreßt wird.

Als Reparaturmaterialien eignen sich besonders Polymer- und Harzdispersionen, die in einer dünnen Schicht auf die Separatorbahn aufgebracht und nach dem Aufbringen auf die defekte Stelle durch Verdampfen des Dispersionsmediums zur Filmbildung gebracht werden. Die Dicke des Films nach dem Verdampfen des Lösungsmittels beträgt vorzugsweise 0,01 bis 0,1 mm. Hierzu eignen sich alle Polymer- und Harzdispersionen, die einen flexiblen, säurebeständigen, auf dem Separator gut haftenden Film bilden. Die Eignung einer Dispersion läßt sich im Einzelfall experimentell leicht ermitteln, beipielsweise durch Lagerung des reparierten Separators in heißer 37 %iger H₂SO₄, gefolgt von Knickversuchen (Umbiegen um ca. 180°) im Bereich der reparierten Fehlstelle. Anschließend wird die Haftung der Beschichtung beurteilt, der Film soll sich bei dieser Behandlung nicht von der Separatoroberfläche lösen. Bevorzugt sind Polymer- und Harzdispersionen auf der Basis von Acrylsäure, Acrylsäureestern, Methacrylsäure und/oder Methacrylsärueestern. Besonders geeignet sind Acrylharz-Dispersionen (z.B. Primal HA-8, Rohm und Haas, Frankfurt), Mischungen aus poly-Acrylsäureester-Dispersionen und Acrylharz-Dispersionen (z.B. 2 Gew.-Teile Acronal 30 D (Acrylsäuremethylester, BASF) und 1 Gew.-Teil Primal HA-16) sowie Mischungen aus Acrylsäureester-Dispersionen und Copolymerdispersionen auf der Basis von Vinylidenchlorid (z.B. 1 Gew.-Teil Acronal 30 D und 1 Gew.-Teil Diofan 233 D (BASF)).

Zur Erleichterung der Verarbeitbarkeit z.B. bei der Sprühanwendung können die Dispersionen bzw. deren Mischungen mit einem geeigneten Lösungsmittel, vorzugsweise in einer Menge von bis zu 2 Gew.-Teilen Lösungsmittel pro Gew.-Teil der Dispersion verdünnt werden. Bevorzugtes Lösungsmittel ist Wasser. Auf diese Weise läßt sich die Viskosität der Dispersionen nahezu beliebig einstellen.

zur Verbesserung der optischen Erscheinung der Reparaturstelle können die Dispersionen zusätzlich mit handelsüblichen Pigmenten wie beispielsweise Ruß oder Titandioxid an die Farbe des Separatormaterials angepaßt werden. Vorzugsweise werden die Dispersionen so eingefärbt, daß die Reparaturstelle bei visueller oder optoelektronischer Kontrolle nicht merhr transparent erscheinen.

Als Reparaturmaterialien ebenfalls geeignet sind polymerisationsfähige Materialien, wie flüssige Acrylatmonomere und Acrylatoligomere sowie Mischungen daraus, die als dünne Schicht auf die Separatorbahn aufgebracht und nach dem Aufbringen auf die defekte Stelle polymerisiert werden. Die Dicke der polymerisierten Schicht beträgt vorzugsweise 0,01 bis 0,1 mm. Hierzu eignen sich alle Monomere und Oligomere, die nach der Polymerisation einen flexiblen, säurebeständigen und auf dem Separator gut haftenden Film bilden. Auch hier läßt sich die Geeignetheit eines Materials im Einzelfall wie oben beschrieben leicht experimentell ermitteln. Bevorzugt sind polymeristionsfähige Materialien auf der Basis von Acrylsäure, Acrylsäureestern, Methacrylsäure und/oder Methacrylsäureestern. Besonders bevorzugt sind 2-Phenoxyacrylat-Monomer (z.B. Sartomer 339, Fa. Cray Valley, Tönisvorst), epoxidiertes Sojaöl-Acrylat-Oligomer (z.B. Craynor 111, Fa. Cray Valley), Mischungen aus 2-Phenoxyacrylat-Monomer und epoxidiertem Sojaöl-Acrylat-Oligomer, insbesondere solche im Gew.-Verhältnis von 1:1 bis 1:9 (z.B. 1 Teil Sartomer 339 und 1 oder 9 Teile Craynor 111), Mischungen aus Urethanacrylat-Oligomer (z.B. Photomer 6162, Fa. Akcros, Siegburg) und 2-Phenoxyacrylat-Monomer, insbesondere solche im Verhältnis von 1:1 bis 9:1 (z.B. 1 oder 9 Teile Photomer 6162 und 1 Teil Sartomer 339), Mischungen aus epoxidiertem Sojaöl-Acrylat-Oligomer und Urethan-acrylat-Oligomer, insbesondere im Verhältnis von 1:2 bis 1:3 (z.B. 1 Teil Craynor 111 und 2 oder 3 Teile Photomer 6162), und Epoxyarylat (z.B. Photomer 3005, Fa. Akcros, Siegburg).

Zur Erleichterung der Verarbeitbarkeit z.B. bei der Sprühanwendung können die polymerisationsfähigen Materialien bzw. deren Mischungen mit einem geeigneten Lösungsmittel, vorzugsweise in einer Menge von bis zu 2 Gew.-Teilen Lösungsmittel pro Gew.-Teil des polymerisationsfähigen Materials verdünnt werden. Bevorzugte Lösungsmittel sind Ethanol und Isopropanol. In der Regel wird das Lösungsmittel vor der Polymerisation verdampft. Besonders geeignete Materialien sind Mischungen aus Epoxidiertem Sojaöl-Acrylat-Oligomer (z.B. Craynor 111)/Urethanacrylat-Oligomer (z.B. Photomer 6162)/Isopropanol im Verhältnis 1:2:3 oder 1:3:4 (Gewichtsteile).

Ähnlich wie die Dispersionen lassen sich die polymerisationsfähigen Materialien der Farbe des Separators angepassen, vorzugsweise so, daß die Reparaturstelle nicht mehr transparent erscheint. Hierbei kann jedoch im Einzelfall die Haftung auf dem Separatur, die Filmbildung und die Aushärtezeit im Vergleich zu den ungefärbten Materialeien negativ beeinflußt werden.

Die Polymerisation kann durch Licht, Elektronenstrahlung, Wärme, Feuchtigkeit oder Luftzutritt initiiert werden, wobei eine Initiierung durch Wärme und die Photoinitiierung bevorzugt sind. Die Mischungen werden vorzugsweise mit einem geeigneten Polymerisationsinitiator, besonders bevorzugt mit einem Photoinitiator oder Wärmeinitiator versetzt. In einer ganz besonders bevorzugten Ausführungsform enthalten die Mischungen zusätzlich einen Coinitiator. Als Photoinitiator ist Isopropylthioxanthon und als Coinitiator Ethyl-4-(dimethylamino)benzoat-bevorzugt.

Die oben aufgeführten Reparaturmaterialien können durch jede geeignete Methode, wie Sprühen, Rollen oder Streichen auf die zu reparierende Stelle aufgebracht werden. Methoden, die ein berührungsloses Aufbringen der Reparaturmaterialien erlauben, wie beispielsweise Aufsprühen, sind bevorzugt.

Eine weitere Variante des erfindungsgemäßen Verfahrens besteht in dem Aufbringen einer heißschmelzenden Masse (Hotmelt) auf die zu reparierende Stelle. Bevorzugt sind Hotmelts auf Polyethylenbasis. Diese Masse wird vorzugsweise mit einem beheizten Stempel auf die Reparaturstelle gepreßt und anschließend durch Abkühlen des Reparaturmaterials gehärtet. Ein zu diesem Zweck besonders bevorzugtes Material wird von der Firma PKL (Linnich) unter dem Namen Smeltan 52-068 vertrieben. Die Viskosität, die Flexibilität und das Klebeverhalten des Hotmelts lassen sich durch Wahl des Molekulargewichts des Materials beeinflussen.

Neben dem Aufbringen eines Reparaturmaterials ist die Behebung von Fehlstellen durch punktuelles Erhitzen und Verschweißen möglich. Hierzu eignet sich insbesondere Ultraschall. Vorzugsweise wird die zu reparierende Stelle während des Verschweißens gleichzeitig leicht gepreßt, um das Verschweißen der Fehlstelle zu beschleunigen.

Das erfindungsgemäße Verfahren eignet sich besonders zur Reparatur von makro- und mikroporösen Separatoren, die aus einem thermoplastischen Kunststoff, wie beispielsweise Polyvinylchlorid, Polyethylen, Polypropylen oder deren Mischungen und gegebenenfalls einem Füllstoff bestehen.

Die Reparaturstellen weisen eine hohe Flexibilität auf, und die nach dem erfindungsgemäßen Verfahren reparierten Separatoren lassen sich problemlos zu Taschen weiterverarbeiten. Dies gilt insbesondere auch für solche Separatoren, deren Reparaturstelle(n) in kritischen Bereichen wie im Falz der unteren Taschenkante oder im Verschweißungsbereich der Tasche liegen. Die reparierten Stellen führen weder beim Falzen noch beim Verschweißen zu Problemen.

Batterieseparatoren weisen im allgemeinen erhabene Versteifungsrippen auf. Der Fußbereich der Rippen stellt einen weiteren Problembereich bei der Reparatur von Separatoren dar, da hier besonders hohe mechanische Belastungen auftreten können. Auch hier erlaubt das erfindungsgemäße Verfahren in allen Variationen eine sichere und dauerhafte Reparatur von Fehlstellen.

Die verwendeten Reparaturmaterialien haften hervorragend an der Separatoroberfläche, und die aus den reparierten Separatoren hergestellten Taschenseparatoren stimmen hinsichtlich ihrer Säurebeständigkeit, mechanischen Festigkeit und Haltbarkeit mit aus nicht-repariertem Material hergestellten Taschenseparatoren in jeder Hinsicht überein.

Der Einfluß einer Reparaturstelle auf den inneren Widerstand eines Akkumulators ist vernachlässigbar klein. Auf der Basis einer Zelle mit sechs Separatortaschen mit einer Fläche von jeweils 24 cm x 15 cm oder 2 x 12 cm x 15 cm und einem Separatorwiderstand von 60 mΩ cm² tragen die Separatoren 0,180 mΩ zum Innenwiderstand der Zelle bei. Eine Reparaturstelle von 9 cm² würde den auf die Separatoren zurückzuführenden Innenwiderstand auf 0,18081 mΩ erhöhen, was sich in einer gemäß DIN 43539-02 durchgeführten Kaltstartprüfung der Batterie in einer rechnerischen Abnahme der Spannung von typischerweise 9,3000 Volt (30 sec Wert) auf 9,2998 Volt ausdrückt.

Durch das erfindungsgemäße Reparaturverfahren lassen sich daher die mit dem Aussortieren fehlerhafter Rollenware bedingten Produktivitätsverluste und die durch unvollständiges Aussortieren von fehlerhaftem Material bedingten Batterieausfälle auf einfache und wirkungsvolle Weise ohne nennenswerte Nachteile vermeiden.

Das Verfahren eignet sich zur "in-line"-Reparatur bei laufender Separatorenbahnproduktion, wobei der zur Reparatur erforderliche Aufwand kaum höher ist, als der Aufwand zum Markieren von Fehlstellen. Im allgemeinen reicht ein einmaliges Aufbringen des Reparaturmaterials auf die Fehlstelle zur dauerhaften Reparatur aus. Die Detektion der Fehlstellen erfolgt auf die aus dem Stand der Technik bekannte Art und Weise.

Im folgenden wird die Erfindung anhand von Ausführungsbeispielen näher erläutert.

### Ausführüngsbeispiele

### Beispiel 1

10 g 2-Phenoxyethylacrylat wurden mit 0,05 g Isopropylthioxanthon (Photoinitiator) und 0,10 g Ethyl-4-(dimethylamino)benzoat (Coinitiator) versetzt. Diese Lösung wurde mit einer preßlufbetriebenen Laborsprühanlage mit Magnetventilsteuerung und einer Breitschlitzdüse (Teejet 650017, Fa. Spraying Systems, Hamburg) auf ein Loch mit einem Durchmesser von 0,3 mm in einem Separator aus gefülltem Polyethylen gesprüht. Der Film wurde 5 Sekunden unter einer UV-Lampe (180 bis 450 nm, Leistung 3 kV, IST-Röhre Typ MCX) ausgehärtet. Der ausgehärtete Film verschloß das Loch vollständig, war sehr flexibel und haftete ausgezeichnet auf dem Separator. Nach einwöchiger Behandlung der Reparaturstelle bei 80° C in 37 %-iger Schwefelsäure zeigte die Reparaturstelle keine Veränderung.

### Beispiel 2

Beispiel 1 wurde wiederholt, jedoch wurde anstelle des 2-Phenoxyethylacrylats epoxidiertes Sojaöl-Acrylat in gleicher Menge eingesetzt. Aufgrund der relativ hohen Viskosität der Mischung wurde die Lösung auf das Loch gestrichen. Versuchsbedingungen und -ergebnisse entsprachen denen aus Beispiel 1.

### Beispiel 3

Beispiel 1 wurde wiederholt, jedoch wurde anstelle des 2-Phenoxyethylacrylats eine Mischung aus gleichen Teilen 2-Phenoxyethylacrylat und epoxidiertem Sojaöl-Acrylat eingesetzt. Die Mischung wies eine relativ niedrige Viskosität auf und konnte auf den Separator gesprüht werden. Die Versuchsergebnisse entsprachen denen aus Beispiel 1.

### Beispiel 4

Beispiel 1 wurde wiederholt, jedoch wurde anstelle von 2-Phenoxyethylacrylat eine Lösung von epoxidiertem Sojaöl-Acrylat in Isopropanol (1 : 1) eingesetzt. Die Lösung wies eine relativ niedrige Viskosität auf und konnte auf den Separator gesprüht werden. Das Lösungsmittel wurde vor der Bestrahlung mit der UV-Lampe durch ca. einminütiges Anblasen mit einem Warmluftgebläse verdampft, die übrigen Versuchsbedingungen und -ergebnisse entsprachen denen aus Beispiel 1.

### Beispiel 5

Eine Mischung aus 1 Teil Acronal® 30 D (Acrylatdispersion, BASF), 1 Teil Diofan® 233 D (Vinylidenchlorid/Acrylatdispersion, BASF) und 2 Teilen Wasser wurde auf ein Loch mit einem Durchmesser von 0,3 mm in einem Separator aus gefülltem Polyethylen gesprüht. Durch 5-minütiges Trocknen in einem Umluftofen bei 100° C wurde ein geschlossener, das Loch vollständig abdeckender, flexibler, gut haftender Film erzeugt, der nach einwöchiger Behandlung bei 80°C in 37 %iger Schwefelsäure keine Veränderung zeigte.

### Beispiel 6

Ein auf 150° C erhitztes Hotmelt (Smeltan 52-068, PKL) wurde auf einen ebenfalls auf 150° C aufgeheizten Stempel gebracht, dessen planare Stempelfläche mittig eine etwa 1,5 bis 2,0 mm tiefe konische Bohrung aufwies. Der Stempel mit dem plastischen Hotmelt wurde auf eine defekte Stelle in der Separatorbahn gedrückt, wobei durch den per Hand aufgewendeten Druck das plastische und viskose Hotmelt in das Loch gepreßt wurde. Nach einigen Sekunden war das Hotmelt erstarrt und das Loch durch das Hotmelt pfropfartig permanent verschlossen. Überschüssiges erstarrtes Hotmelt mußte nach dem Abkühlen nicht extra entfernt werden.

### Beispiel 7

Zum Verschweißen von Löchern unter Verwendung von Ultraschall wurde ein Ultraschallgenerator der Firma KLN System 585 und ein KLN-Ultraschallkopf, Gerätetyp 250/707 verwendet. Es wurde eine Sonotrode mit der Typenbezeichnung SoL 908 (40 kHz) eingesetzt.

Die Sonotrode wurde auf die Stelle eines 0,25 mm dicken Separators aus gefülltem Polyethylen gepreßt, an der sich das Loch befand. Das Loch wies einen Durchmesser von etwa 0,3 mm auf. Der Abstand zwischen Amboß und Sonotrode wurde auf 0,20 mm eingestellt, um einen gewissen Druck auf das zu verschweißende Separatormaterial auszuüben und dadurch die Verschweißung zu begünstigen. Durch die mechanische Schwingungsenergie der Sonotrode wurde der Separator an der betreffenden Stelle aufgeheizt und des Loch aufgrund des aufgebrachten Drucks durch die plastische formbare Masse des erhitzten Separators zugeschweißt. Eine visuelle Prüfung des Separators auf einem Leuchtkasten zeigte, daß das Loch verschlossen war.

## Patentansprüche

1. Verfahren zur Reparatur von fertigungsbedingten Fehlstellen in porösen Separatorbahnen für Akkumulatoren, **dadurch gekennzeichnet,** daß ein Reparaturmaterial bei laufender Separatorproduktion in-line gezielt auf die Fehlstelle aufgebracht und diese damit verschlossen wird oder die Fehlstelle in-line punktuell erhitzt und dadurch verschweißt wird.

2. Verfahren nach Anspruch 1, **dadurch gekennzeichnet,** daß als Reparaturmaterial ein in einem Dispersionsmittel dispergiertes Polymer und/oder Harz verwendet und das Dispersionsmittel nach dem Aufbringen durch Abdampfen entfernt wird.

3. Verfahren nach Anspruch 2, **dadurch gekennzeichnet,** daß ein Polymer und/oder Harz auf der Basis von Acrylsäure, Acrylsäureestern, Methacrylsäure und/oder Methacrylsärueestern verwendet wird.

4. Verfahren nach Anspruch 1, **dadurch gekennzeichnet,** daß als Reparaturmaterial ein polymerisationsfähiges Material verwendet und nach dem Aufbringen auf die Fehlstelle polymerisiert wird.

5. Verfahren nach Anspruch 4, **dadurch gekennzeichnet,** daß ein polymerisationsfähiges Material auf der Basis von Acrylsäure, Acrylsäureestern, Methacrylsäure und/oder Methacrylsärueestern verwendet wird.

6. Verfahren nach einem der Ansprüche 4 oder 5, **dadurch gekennzeichnet,** daß als Acrylatmonomer 2-Phenoxyethylacrylat und/oder epoxidiertes Sojaöl-Acrylat verwendet wird.

7. Verfahren nach einem der Ansprüche 4 bis 6, **dadurch gekennzeichnet,** daß ein polymerisationsfähiges Material verwendet wird, das zusätzlich einen Polymerisationsinitiator für die Wärme- und/oder Photoinitiierung enthält.

8. Verfahren nach Anspruch 1, **dadurch gekennzeichnet,** daß als Reparaturmaterial eine heißschmelzende Masse (Hotmelt) verwendet und nach dem Auftragen auf die Fehlstelle durch Abkühlen gehärtet wird.

9. Verfahren nach Anspruch 1, **dadurch gekennzeichnet**, daß die defekte Stelle mittels Ultraschall punktuell verschweißt wird.

10. Verfahren nach einem der Ansprüche 1 bis 9, **dadurch gekennzeichnet,** daß der Separator aus einem thermoplastischen Kunststoff besteht.

11. Verfahren nach Anspruch 10, **dadurch gekennzeichnet,** daß der Separator aus PVC, Polyethylen, Polypropylen oder deren Mischungen und gegebenenfalls einem Füllstoff besteht.

12. Verfahren nach einem der Ansprüche 1 bis 11, **dadurch gekennzeichnet,** daß der Separator in Form von Rollenware vorliegt.

## Claims

1. Process for repairing manufacture-related defects in porous separator webs for batteries, characterized in that, during continuous separator production, a repair material is applied in-line specifically to the defect and the latter is closed therewith or the defect is heated locally in-line and thus welded.

2. Process according to Claim 1, characterized in that the repair material used is a polymer and/or resin dispersed in a dispersant, and the dispersant is removed after application by evaporation.

3. Process according to Claim 2, characterized in that a polymer and/or resin based on acrylic acid, acrylic esters, methacrylic acid and/or methacrylic esters is used.

4. Process according to Claim 1, characterized in that a polymerizable material is used as the repair material and is polymerized after application to the defect.

5. Process according to Claim 4, characterized in that a polymerizable material based on acrylic acid, acrylic esters, methacrylic acid and/or methacrylic esters is used.

6. Process according to either of Claims 4 and 5, characterized in that the acrylate monomer used is 2-phenoxyethyl acrylate and/or epoxidized soya oil acrylate.

7. Process according to any of Claims 4 to 6, characterized in that a polymerizable material is used which additionally contains a polymerization initiator for thermal initiation and/or photoinitiation.

8. Process according to Claim 1, characterized in that a hotmelt is used as the repair material and is cured after application to the defect by cooling.

9. Process according to Claim 1, characterized in that the defect is spot-welded by means of ultrasonics.

10. Process according to any of Claims 1 to 9, characterized in that the separator consists of a thermoplastic.

11. Process according to Claim 10, characterized in that the separator consists of PVC, polyethylene, polypropylene or mixtures thereof and optionally a filler.

12. Process according to any of Claims 1 to 11, characterized in that the separator is present as material wound into rolls.

## Revendications

1. Procédé pour la réparation de défauts dus à la fabrication dans des bandes poreuses de séparateurs pour accumulateurs, caractérisé en ce qu'un matériau de réparation est appliqué en ligne, de façon ciblée, sur le défaut, pendant que se déroule la production de séparateurs, et celui-ci est ainsi obturé, ou le défaut est chauffé ponctuellement en ligne et ainsi soudé.

2. Procédé selon la revendication 1, caractérisé en ce que l'on utilise comme matériau de réparation un polymère et/ou une résine dispersés dans un dispersant et le dispersant est éliminé par évaporation après l'application.

3. Procédé selon la revendication 2, caractérisé en ce que l'on utilise un polymère et/ou une résine à base d'acide acrylique, d'esters d'acide acrylique, d'acide méthacrylique et/ou d'esters d'acide méthacrylique.

4. Procédé selon la revendication 1, caractérisé en ce que l'on utilise comme matériau de réparation un matériau polymérisable qui est polymérisé après l'application sur le défaut.

5. Procédé selon la revendication 4, caractérisé en ce que l'on utilise un matériau polymérisable à base d'acide acrylique, d'esters d'acide acrylique, d'acide méthacrylique et/ou d'esters d'acide méthacrylique.

6. Procédé selon la revendication 4 ou 5, caractérisé en ce que l'on utilise comme monomère acrylate l'acrylate de 2-phénoxyéthyle et/ou l'acrylate d'huile de soja époxydée.

7. Procédé selon l'une des revendications 4 à 6, caractérisé en ce que l'on utilise un matériau polymérisable qui contient en outre un initiateur de polymérisation pour l'amorçage par la chaleur et/ou le photo-amorçage.

8. Procédé selon la revendication 1, caractérisé en ce que l'on utilise comme matériau de réparation une matière thermofusible *(hotmelt),* qui est durcie après l'application sur le défaut.

9. Procédé selon la revendication 1, caractérisé en ce que le point défectueux est soudé ponctuellement au moyen d'ultrasons.

10. Procédé selon l'une des revendications 1 à 9, caractérisé en ce que le séparateur est constitué d'une matière synthétique thermoplastique.

11. Procédé selon la revendication 10, caractérisé en ce que le séparateur est constitué de PVC, polyéthylène, polypropylène ou de mélanges de ceux-ci et éventuellement d'une charge.

12. Procédé selon l'une des revendications 1 à 11, caractérisé en ce que le séparateur se trouve sous forme d'article en rouleau.
